# EUROPÄISCHE PATENTANMELDUNG

(11) **EP 1 459 668 A1**
(43) Veröffentlichungstag der Anmeldung: **22.09.2004**
(21) Anmeldenummer: 03028603.3
(22) Anmeldetag: 12.12.2003
(51) Int. Cl.: A47J 47/00

(54) **Schneidbrett für Lebensmittel**

(30) Priorität: 18.03.2003 DE 20304285 U
(71) Anmelder: Fackelmann GmbH + Co. KG, 91217 Hersbruck (DE)
(72) Erfinder: Ellerstorfer, Thomas, 93413 Cham (DE)
(74) Vertreter: Schneck, Herbert, Dipl.-Phys., Dr.

(57) **Zusammenfassung**

Bei einem Schneidbrett für Lebensmittel für Haushalts- und Gastronomiezwecke, ist vorgesehen, dem Schneidbrett ( 1 ) eine Aufnahmeschale (3) für das Schneidgut derart zuzuordnen, dass das Schneidgut unmittelbar von der Oberfläche (2) des Schneidbretts (2) in die Aufnahmeschale (3) überführbar ist.

## Beschreibung

Die Erfindung richtet sich auf ein Schneidbrett für Lebensmittel für Haushalts- und Gastronomiezwecke.

Derartige Schneidbretter werden dazu verwendet, um Gemüse, Kartoffeln, Zwiebeln oder andere Produkte zur Zubereitung von Speisen zu schneiden. Üblicherweise wird dabei beispielsweise eine Zwiebel genommen, auf dem Schneidbrett zerkleinert und die Zwiebelscheiben oder -stücke werden dann in einen Zwischenvorratsbehälter oder gleich in ein Koch- oder Bratgefäß gegeben. Dieser Vorgang wird solange wiederholt, bis die erforderliche Menge erreicht ist. Dabei ist es also zwischendurch immer wieder erforderlich, das Schneidbrett zu ergreifen, anzuheben und gezielt die zerkleinerten Produkte mit dem Messer abzustreifen, wobei die Gefahr besteht, dass Teile auch verstreut werden.

Hiervon ausgehend liegt der Erfindung die Aufgabe zugrunde, ein Schneidbrett der eingangs genannten Art so auszugestalten, dass der Arbeitsvorgang nicht unterbrochen werden muss, bis die gewünschte Menge kleingeschnitten ist, und außerdem dafür zu sorgen, dass bei bequemer Handhabung das geschnittene Gut vollständig in das vorbestimmte Gefäß gelangt.

Diese Aufgabe wird erfindungsgemäß dadurch gelöst, dass dem Schneidbrett eine Aufnahmeschale für das Schneidgut derart zugeordnet ist, dass das Schneidgut unmittelbar von der Oberfläche des Schneidbretts in die Aufnahmeschale überführbar ist. Dies wird im einfachsten Fall dadurch bewerkstelligt, dass nach Beendigung des Schneidvorgangs, wenn also z.B. eine erste Zwiebel kleingeschnitten ist, die Teile mittels des Messers in die Aufnahmeschale geschoben werden, wobei dann unmittelbar anschließend das nächste Produkt gleicher oder unterschiedlicher Art geschnitten werden kann.

Erst wenn die gewünschte Menge an Schneidgut erreicht ist, wird die Gesamtheit dieser Menge in das vorgesehene Gefäß entleert, wobei im Gegensatz zu einem ebenen Brett, welches seitlich keine Führung aufweist, eine erfindungsgemäße Aufnahmeschale mit seitlichen Rändern eine definierte, zielgerichtete Entleerung ermöglicht.

Vorteilhafterweise ist vorgesehen, dass wenigstens eine der Aufnahmeschale zugeordnete Stirnseite des Schneidbretts von oben nach unten innen schräg verläuft und günstigerweise ebenfalls die Aufnahmeschale an die von oben nach unten innen verlaufende Stirnseite formschlüssig ansetzbar ist, d.h. von oben nach außen schräg verlaufend ausgebildet ist.

Hierdurch wird eine definierte Abstreif-Kante am Außenrand des Schneidbretts ausgebildet, so dass das Schnittgut ohne an der Kante zu haften direkt in die Aufnahmeschale überführt werden kann.

Im Rahmen der Erfindung können unterschiedliche Verbindungsmittel zwischen Schneidbrett und Aufnahmeschale vorgesehen sein. Vorteilhaft ist es, die Aufnahmeschale einfach formschlüssig, insbesondere durch Aufstecken am Schneidbrett zu befestigen.

Hierzu kann die Aufnahmeschale insbesondere einen Steckansatz aufweisen, der formschlüssig in eine korrespondierende Steckausnehmung des Schneidbretts einsteckbar ist.

Der Steckansatz kann zur Erzielung einer definierten reibschlüssigen Steckverbindung vorzugsweise schwalbenschwanzförmig ausgebildet sein.

Die Steckausnehmung kann an der Unterseite des Schneidbretts durch den Zwischenraum zwischen zwei Füßen des Schneidbretts ausgebildet sein, so dass das Schneidbrett als solche aus einem massiven Brett bestehen kann.

Günstigerweise ist eine Halteeinrichtung für einen Abfallbeutel vorgesehen, der an einer Seite des Brettes, welche von der Aufnahmeschale nicht in Anspruch genommen werden kann, angeordnet ist. Auf diese Weise ist es möglich, beim Schneiden anfallende Abfälle ebenfalls unmittelbar in einen Abfallbeutel zu überführen.

Nachfolgend wird die Erfindung anhand eines bevorzugten Ausführungsbeispiels in Verbindung mit der Zeichnung näher erläutert. Dabei zeigen:
- Fig. 1: eine Aufsicht auf ein erfindungsgemäßes Schneidbrett mit Aufnahmeschale,
- Fig. 2: einen Schnitt längs der Linie II-II in Fig. 1,
- Fig. 3: eine Ansicht des Schneidbretts nach unten, und
- Fig. 4: eine Ansicht in Richtung des Pfeils IV in Fig. 3.

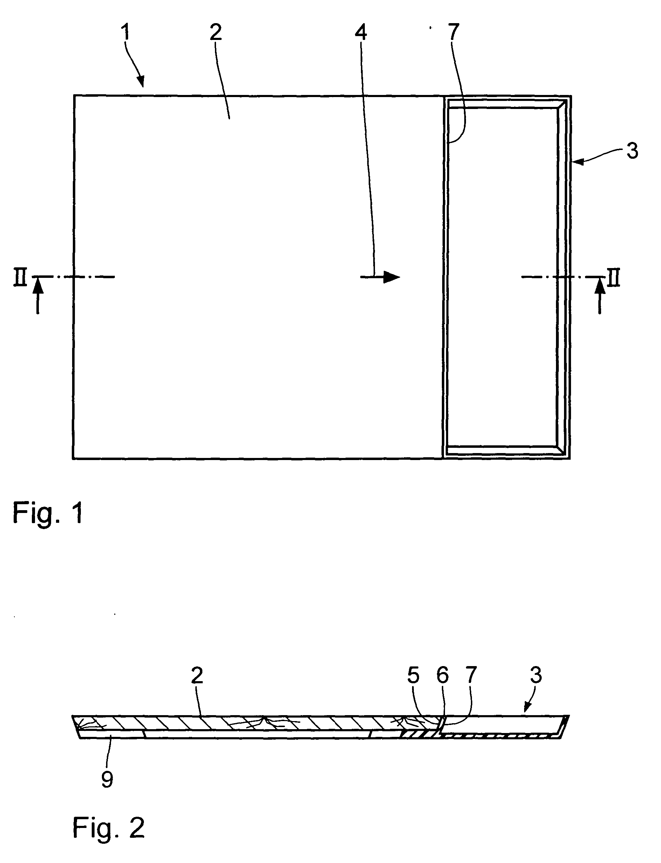

Ein in der Zeichnung dargestelltes Schneidbrett 1 weist eine Schneidoberfläche 2 zum Schneiden des Schneidgutes auf und eine zugeordnete Aufnahmeschale 3, welche, wie insbesondere aus Fig. 2 erkennbar, mit der Schneidfläche 2 derart fluchtend angeordnet ist, dass das zu zerkleinernde Gut in Richtung des Pfeils 4 in Fig. 1 von der Schneidfläche 2 in die Aufnahmeschale 3 unmittelbar überführt werden kann.

Die Stirnseiten 5 des Schneidbretts 1 verlaufen von oben nach innen unten, so dass eine vergleichsweise scharfe Übergabekante 6 ausgebildet wird, von der das Schneidgut beim Überführen in die Aufnahmeschale 3 definiert abfällt.

Die Aufnahmeschale 3 weist einen Rand 7 auf, der in dem der Übergabekante 6 zugewandten Bereich von oben nach unten außen verläuft, d.h. formschlüssig an die Stirnseite 5 ansetzbar ist.

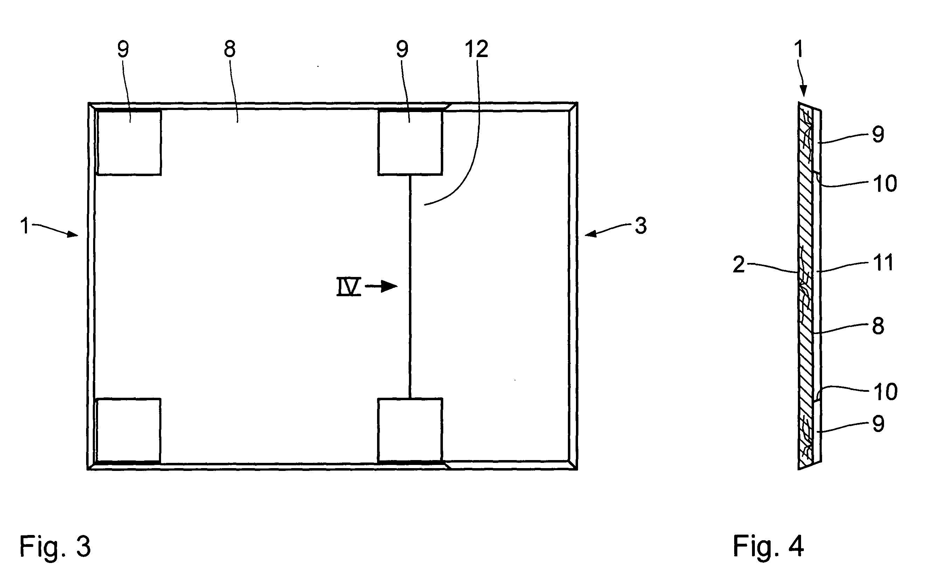

An der in Fig. 3 dargestellten Unterseite 8 des Schneidbretts 1 sind flache Füße 9 angebracht, deren innere, einander gegenüberliegende Stirnseiten 10, wie in Fig. 4 erkennbar, von oben nach schräg außen unten verlaufen, so dass zwischen den gegenüberliegenden Stirnseiten 10 und der Unterseite 8 des Schneidbretts 1 eine Art Schwalbenschwanzprofil ausgebildet wird, welches als Steckausnehmung 11 fungiert.

Die Aufnahmeschale 3 weist einen Steckansatz 12 auf, der ein korrespondierendes Schwalbenschwanzprofil aufweist und dementsprechend, wie aus Fig. 3 erkennbar zwischen die Füße 9 unter das Schneidbrett 1 derart einschiebbar ist, dass der Rand 7 unter der Kante 6 an der Stirnseite 5 des Schneidbretts 1 zu liegen kommt. Hierdurch wird eine feste Arretierung der Aufnahmeschale 3 einerseits und gleichzeitig aber ein leichtes Lösen nach Beendigung des Schneidvorgangs ermöglicht.

## Patentansprüche

1. Schneidbrett für Lebensmittel für Haushalts- und Gastronomiezwecke, **dadurch gekennzeichnet, dass** dem Schneidbrett (1) eine Aufnahmeschale (3) für das Schneidgut derart zugeordnet ist, dass das Schneidgut unmittelbar von der Oberfläche (2) des Schneidbretts (2) in die Aufnahmeschale (3) überführbar ist.

2. Schneidbrett nach Anspruch 1, **dadurch gekennzeichnet, dass** wenigstens eine der Aufnahmeschale (3) zugeordnete Stirnseite (5) des Schneidbretts (1) von oben nach unten innen schräg verläuft.

3. Schneidbrett nach Anspruch 2, **dadurch gekennzeichnet, dass** die Aufnahmeschale (3) an die von oben nach unten innen verlaufende Stirnseite (5) formschlüssig ansetzbar ist.

4. Schneidbrett nach Anspruch 1, **dadurch gekennzeichnet, dass** die Aufnahmeschale (3) an wenigstens eine Stirnseite (5) des Schneidbretts (1) ansteckbar ist.

5. Schneidbrett nach einem der Ansprüche 1 bis 4, **dadurch gekennzeichnet, dass** die Aufnahmeschale (3) einen Steckansatz (12) aufweist, der formschlüssig in eine korrespondierende Ausnehmung (11)des Schneidbretts (1) einsteckbar ist.

6. Schneidbrett nach Anspruch 5, **dadurch gekennzeichnet, dass** der Steckansatz (12) schwalbenschwanzförmig ausgebildet ist.

7. Schneidbrett nach Anspruch 6, **dadurch gekennzeichnet, dass** die Steckausnehmung (11) an der Unterseite (8) des Schneidbretts (1) durch den Zwischenraum zwischen zwei Füßen (9) des Schneidbretts (1) ausgebildet ist.

8. Schneidbrett nach Anspruch 1, **dadurch gekennzeichnet, dass** es eine Halteeinrichtung, insbesondere in Form einer Klemmleiste, für einen Abfallbeutel aufweist.
